# EUROPEAN PATENT APPLICATION

(11) **EP 1 557 771 A2**
(43) Date of publication of application: **27.07.2005**
(21) Application number: 05000835.8
(22) Date of filing: 17.01.2005
(51) Int. Cl.: G06F 17/30

(54) **Infrequent word index for document indexes**

(30) Priority: 20.01.2004 US 761160
(71) Applicant: MICROSOFT CORPORATION, Redmond, Washington 98052 (US)
(72) Inventor: Shakib, Darren A., Redmond, WA 98052 (US); Burrows, Michael, Redmond, WA 98052 (US); Sareen, Gaurav, Redmond, WA 98052 (US)
(74) Representative: Grünecker, Kinkeldey, Stockmair & Schwanhäusser Anwaltssozietät

(57) **Abstract**

A document indexing system utilizes two indexes. An infrequent word index is maintained separately from a frequent word index to map the locations of words that occur infrequently in the indexed documents. The infrequent word index may be stored and partitioned differently than the frequent word index to promote efficiency.

## Description

### Technical Field

The invention pertains generally to the field of document indexing for use by internet search engines and in particular to an index scheme that features a specific index for words that occur infrequently in documents.

### Background of the Invention

Typical document indexing systems have word occurrence data arranged in an inverted content index partitioned by document. The data is distributed over multiple index storage dedicated computer systems with each computer system handling a subset of the total set of documents that are indexed. This allows for a word search query to be presented to a number of computer systems at once with each computer system processing the query with respect to the documents that are handled by the computer system.

An inverted word location index partitioned by document is generally more efficient than an index partitioned by word. This is because partitioning by word becomes expensive when it is necessary to rank hits over multiple words. Large amounts of information are exchanged between computer systems for words with many occurrences. Therefore, typical document index systems are partitioned by document.

### Summary of the Invention

An infrequent word index for infrequently occurring words is created and maintained separately from a frequent word index that is partitioned by document, making better use of memory and disk activity and allowing for better scalability.

An index system facilitates the search for documents containing words corresponding to a user query. The index system identifies infrequent words that occur in less than a threshold number of documents and maintains an infrequent word index that maps the infrequent words to the locations of documents containing them. A frequent word index is maintained separately that maps the location of documents that contain words that occur in more than the threshold number of documents. When the index system is employed to search for words in a user query, the system detects infrequent words in the query and scans the infrequent word index to find the location of documents containing the infrequent word.

The infrequent word index may be stored and partitioned in a manner difference from the frequent word index. The infrequent word index may be stored on a dedicated computer system or distributed across multiple computer systems in dedicated partitions.

These and other objects, advantages and features of the invention are described in greater detail in conjunction with the accompanying drawings.

### Brief Description of the Drawings

The present invention is illustrated by way of example and not limitation in the figures of the accompanying drawings, in which:
Figure 1 illustrates an exemplary operating environment for a system for processing and routing database queries;
Figure 2 is a block diagram of a computer system architecture for practicing an embodiment of the present invention;
Figure 3 is a functional block diagram of an index generation process that can be used in practice of an embodiment of the present invention;
Figure 4 is functional block diagram of an index serving process that can be used in practice of an embodiment of the present invention;
Figure 5 is an illustration of an indexing scheme in accordance with an embodiment of the present invention; and
Figure 6 is an illustration of an indexing scheme in accordance with an embodiment of the present invention.

### Detailed Description of the Preferred Embodiment

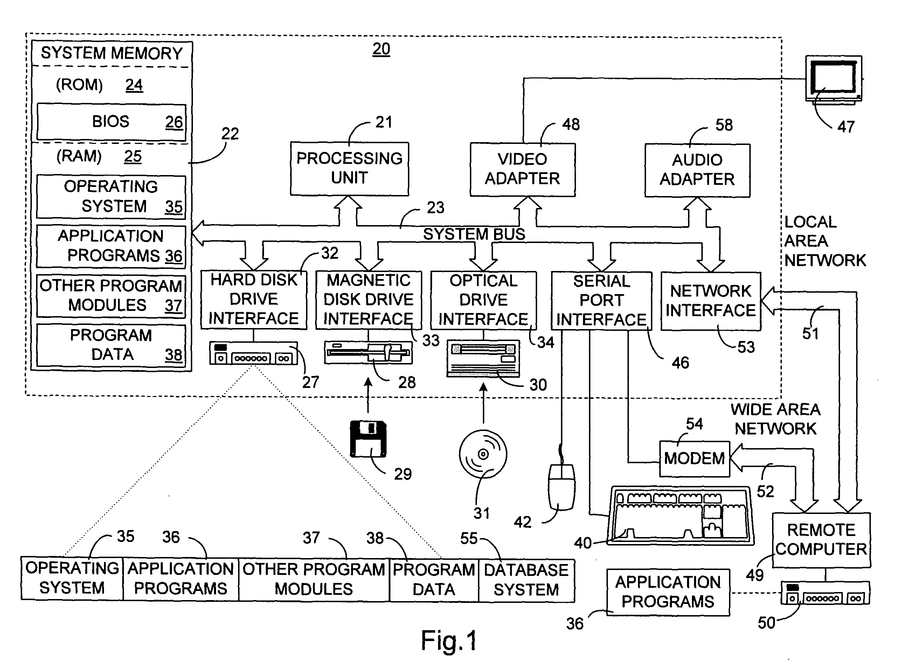

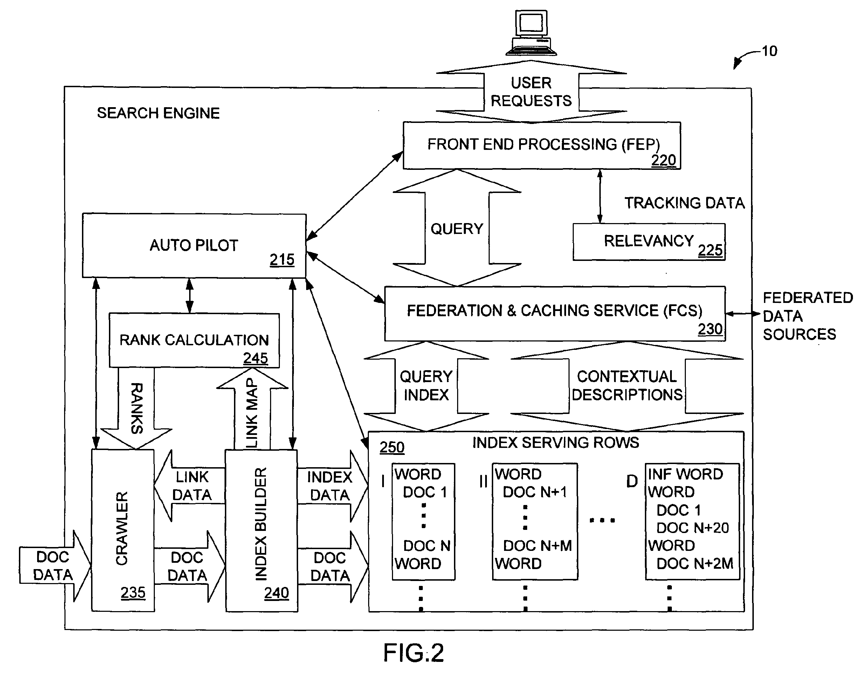

Figure 2 illustrates a block diagram of a search engine 10 that features a document index system that takes in document data and indexes the content of the documents by word. A web crawler 235 accesses documents on the internet to be indexed by the index system and passes the document data to an index builder 240 that parses the document and extracts words and word locations for storage in index serving rows 250. The web crawler, index builder, maintenance of the index serving rows as well as the search engine are typically constructed in software executing on a computer system 20 (Figure 1). The computer system 20 is in turn coupled by means of communications connections to other computer systems by means of a network.

The index serving rows 250 can be constructed as a matrix of computer systems 20 with each computer system in a row storing word locations for a subset of the documents that have been indexed. Additional rows of computer systems 20 in the index serving rows may store copies of the data that is found in computer systems in the first row to allow for parallel processing of queries and back up in the event of computer system failure.

### Infrequent Word Index

As discussed in the background, partitioning by document is a typical way of constructing document indexes. While this approach efficiently deals with a words having a significant number of occurrences ("frequent" words), inefficiencies areas such as caching and I/O costs are introduced for words that occur infrequently ("infrequent" words). For example, infrequent words are located between frequent words, making caching the data less efficient since infrequent words are typically queried less often than frequent words. When pages of memory containing frequent words that are more often queried are moved into memory, infrequent and therefore less useful words are included in the pages, occupying valuable cache storage and offering little benefit.

Another penalty to having infrequent words mixed with frequent words is in the area of disk I/O. Queries are distributed to all computer systems containing documents and each computer system must perform I/O and search operations to retrieve a few, if any, bytes of information. Accordingly, an infrequent word index is created and maintained separate from the frequent word index that is partitioned by document. This makes better use of memory and disk activity and can allow for better scalability.

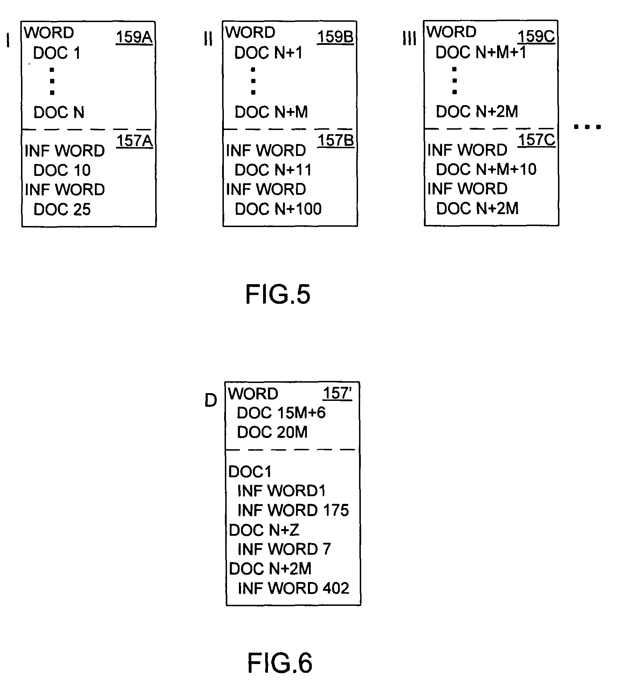

Referring again to Figure 2, a computer system layout architecture 10 for a document search system is shown. Auto pilot computer systems 215 coordinate the working of the other computer systems in the system as it processes user queries and requests. A rank calculation module 245 tracks the popularity of web sites and feeds this information to a web crawler 235 that retrieves documents from the internet based on links that exist on web pages that have been processed. An index builder 240 indexes the words that are found in the documents retrieved by the crawler 235 and passes the data to a set of index serving rows 250 that store the indexed information. In the embodiment described here, the index serving rows include ten "rows" or sets of five hundred computer systems in each row. Indexed documents are distributed across the five hundred computer systems in a row. The ten rows contain the same index data and are copies of one another to allow for parallel processing of requests and for back up purposes. The indexer places any information about infrequent words in a dedicated partition or computer system (labeled "D" in the index serving rows 250) that stores an infrequent word index. This infrequent word index may be stored word as shown in Figure 2 or by document as shown in Figure 6 and described in more detail below.

A front end processor 220 accepts user requests or queries and passes queries to a federation and caching service 230 that routes the query to appropriate external data sources as well as accessing the index serving rows 250 to search internally stored information. The query results are provided to the front end processor 220 by the federation and caching service 230 and the front end processor 220 interfaces with the user to provide ranked results in an appropriate format. The front end processor 220 also tracks the relevance of the provided results by monitoring, among other things, which of the results are selected by the user.

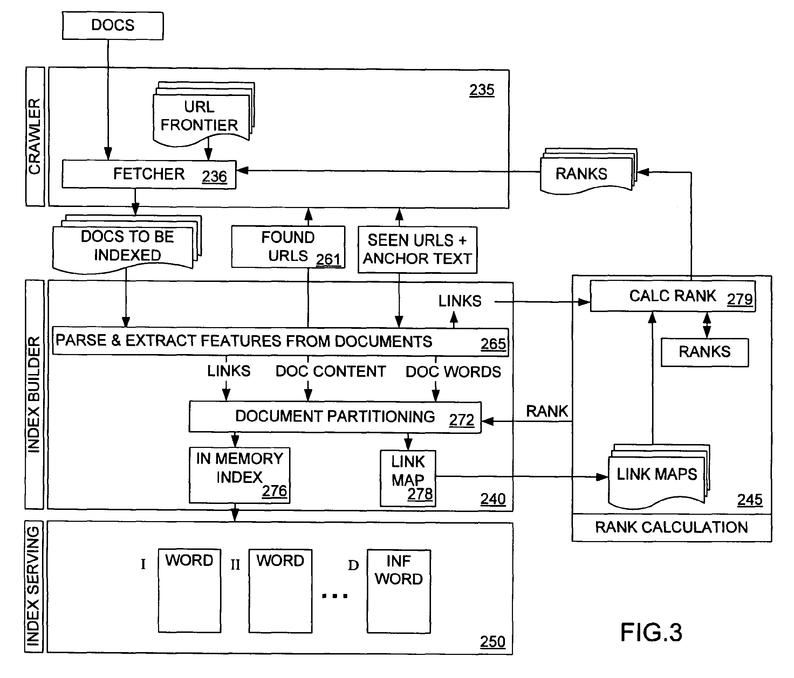

Figure 3 shows a functional block diagram that provides more detail on the functioning of the web crawler 235, index builder 240, and index serving rows 250. The crawler includes a fetcher component 236 that fetches documents from the web and provides the documents to be indexed to the index builder 240. Information about URLs found in the indexed documents 261 is fed to the crawler 235 to provide the fetcher 236 with new sites to visit. The crawler may use rank information from the rank calculation module 245 to prioritize the sites it accesses to retrieve documents.

Documents to be indexed are passed from the crawler 235 to the index builder 240 that includes a parser 265 that parses the documents and extracts features from the documents. A link map 278 that includes any links found in a document are passed to the rank calculating module 245. The rank calculating block 245 assigns a query independent rank to the document being parsed. This query independent static rank can be based on a number of other documents that have links to the document, usage data for the URL being analyzed, or a static analysis of the document, or any combination of these or other factors.

Document content, any links found in the document, and the document's static rank are passed to a document partitioning module 272 that distributes the indexed document content amongst the computer systems in the index serving row by passing an in memory index 276 to a selected computer system. A link map 278 is provided to the rank calculation module 245 for use in calculating the static rank of future documents.

Infrequent words may be routed to a designated computer system 273 in the row as shown in Figure 2 or may be routed to document partitioning 272 if the infrequent word index is stored in partitiones distributed across the same computer systems as the frequent word index as shown in Figure 5.

The determination of whether or not a word is infrequent or not involves setting a threshold number of occurrences over the data set being indexed. This threshold can be established based on the amount of network load that can be tolerated or based on the size of disk I/O operations. When the index is built the words are partitioned and the frequent words stored in a frequent word index and the infrequent words are stored in an infrequent word index that may be stored on a single computer system as shown in Figure 2 or distributed over the row of computer systems as will be discussed in conjunction with Figures 5 and 6.

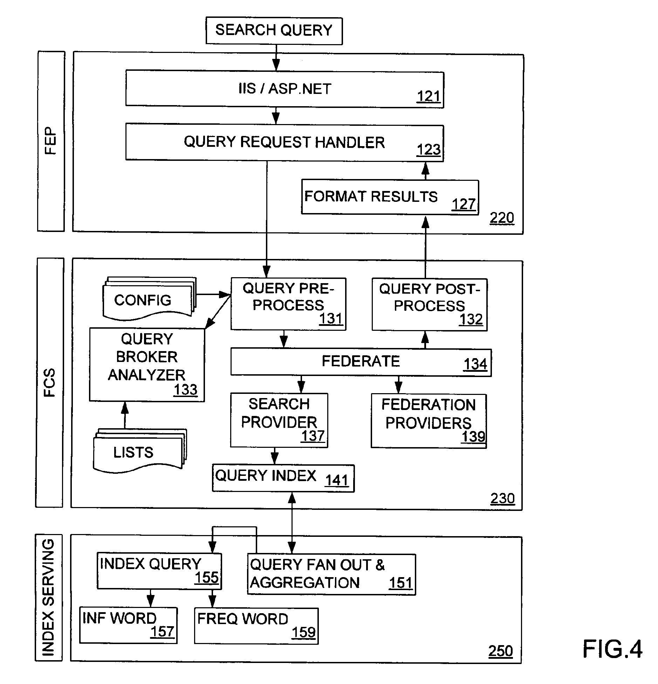

Figure 4 illustrates a functional block diagram for the handling of search queries with respect to the index serving rows 250. The search query is routed to a query request handler 123 that directs the query to the federation and caching service 230 where preprocessing 131 is performed on the query to get it in better condition for presentation to a federation module 134 that selectively routes the query to data sources such as a search provider 137 and external federation providers 139. The search provider 137 is an "internal" provider that is maintained by the same provider as the search engine. External federation providers 139 are maintained separately and may be accessed by the search engine under an agreement with the search engine provider. To evaluate a query on the search provider 137, the search provider routes the query 141 to a query fan out and aggregation module 151 that distributes the query over the computer systems in a selected row of the index serving rows 250 and aggregates the results returned from the various computer systems. The index query 155 from the fan out module is executed on the infrequent word index and the frequent word indexes 157, 159.

Figures 5 and 6 illustrate two alternative ways of storing the infrequent word index in a distributed manner across a row of computer systems. Figure 5 shows computer systems I, II, and III that each store a subset of the indexed document numbers 1 to N, N+1 to N+M, and N+M+1 to N+2M respectively. The region of the frequent word index 159 that is adjacent to the infrequent word index 157 is shown. In Figure 5, both the frequent word and infrequent word indexes are indexed and partitioned on document. Referring also to Figure 4, when the query index provides the query to the fan out and aggregation module 151, the words in the query are checked to determine if any infrequent words are present. If there are no infrequent words, then the query is processed as before. If there are infrequent words then the infrequent word index data 159 can be retrieved and then combined with the frequent word index data 157. If the infrequent word data is partitioned by document the data is read and processed on each index serving computer system. Caching will be slightly improved since the infrequent word data will probably get aged out more quickly and the frequent word index will likely be a denser cache.

Figure 6 shows an infrequent word index 157' that is not partitioned by document and is resident on a single computer system D. The data is stored by word rather than by document. Each computer system in the selected indexing row will get data on any infrequent words by accessing the computer system storing the infrequent word data. Using a push approach, the computer system generating the query can first retrieve the infrequent word data and then push it out to all of the index serving computer systems. This simplifies the process since the index serving nodes will not need to communicate with each other but always puts the data onto the network since it flows with the query. In a pull approach, each index serving node requests either the entire word information or just the information for the documents that it contains. With the pull approach, the index serving node could cache the data. A cache of recently queried infrequently occurring words can increase efficiency if there are some infrequent words that are frequently queried.

### Exemplary Operating Environment

Figure 1 and the following discussion are intended to provide a brief, general description of a suitable computing environment in which the invention may be implemented. Although not required, the invention will be described in the general context of computer-executable instructions, such as program modules, being executed by a personal computer. Generally, program modules include routines, programs, objects, components, data structures, etc., that perform particular tasks or implement particular abstract data types. Moreover, those skilled in the art will appreciate that the invention may be practiced with other computer system configurations, including handheld devices, multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to Figure 1, an exemplary system for implementing the invention includes a general purpose computing device in the form of a conventional personal computer 20, including a processing unit 21, a system memory 22, and a system bus 24 that couples various system components including system memory 22 to processing unit 21. System bus 23 may be any of several types of bus structures including a memory bus or memory controller, a peripheral bus, and a local bus using any of a variety of bus architectures. System memory 22 includes read only memory (ROM) 24 and random access memory (RAM) 25. A basic input/output system (BIOS) 26, containing the basic routines that help to transfer information between elements within personal computer 20, such as during start-up, is stored in ROM 24. Personal computer 20 further includes a hard disk drive 27 for reading from and writing to a hard disk, a magnetic disk drive 28 for reading from or writing to a removable magnetic disk 29 and an optical disk drive 30 for reading from or writing to a removable optical disk 31 such as a CD ROM or other optical media. Hard disk drive 27, magnetic disk drive 28, and optical disk drive 30 are connected to system bus 23 by a hard disk drive interface 32, a magnetic disk drive interface 33, and an optical drive interface 34, respectively. The drives and their associated computer-readable media provide nonvolatile storage of computer-readable instructions, data structures, program modules and other data for personal computer 20. Although the exemplary environment described herein employs a hard disk, a removable magnetic disk 29 and a removable optical disk 31, it should be appreciated by those skilled in the art that other types of computer-readable media which can store data that is accessible by computer, such as random access memories (RAMs), read only memories (ROMs), and the like may also be used in the exemplary operating environment.

A number of program modules may be stored on the hard disk, magnetic disk 129, optical disk 31, ROM 24 or RAM 25, including an operating system 35, one or more application programs 36, other program modules 37, and program data 38. A database system 55 may also be stored on the hard disk, magnetic disk 29, optical disk 31, ROM 24 or RAM 25. A user may enter commands and information into personal computer 20 through input devices such as a keyboard 40 and pointing device 42. Other input devices may include a microphone, joystick, game pad, satellite dish, scanner, or the like. These and other input devices are often connected to processing unit 21 through a serial port interface 46 that is coupled to system bus 23, but may be connected by other interfaces, such as a parallel port, game port or a universal serial bus (USB). A monitor 47 or other type of display device is also connected to system bus 23 via an interface, such as a video adapter 48. In addition to the monitor, personal computers typically include other peripheral output devices such as speakers and printers.

Personal computer 20 may operate in a networked environment using logical connections to one or more remote computers, such as a remote computer 49. Remote computer 49 may be another personal computer, a server, a router, a network PC, a peer device or other common network node, and typically includes many or all of the elements described above relative to personal computer 20, although only a memory storage device 50 has been illustrated in Figure 1. The logical connections depicted in Figure 1 include local area network (LAN) 51 and a wide area network (WAN) 52. Such networking environments are commonplace in offices, enterprise-wide computer networks, intranets, and the Internet.

When using a LAN networking environment, personal computer 20 is connected to local network 51 through a network interface or adapter 53. When used in a WAN networking environment, personal computer 20 typically includes a modem 54 or other means for establishing communication over wide area network 52, such as the Internet. Modem 54, which may be internal or external, is connected to system bus 23 via serial port interface 46. In a networked environment, program modules depicted relative to personal computer 20, or portions thereof, may be stored in remote memory storage device 50. It will be appreciated that the network connections shown are exemplary and other means of establishing a communications link between the computers may be used.

It can be seen from the foregoing description that building and maintaining an index of infrequent words separately from a frequent word index can improve system performance. Although the present invention has been described with a degree of particularity, it is the intent that the invention include all modifications and alterations from the disclosed design falling within the spirit or scope of the appended claims.

## Claims

1. A system for use with a search engine that processes user queries, the system for locating documents containing words corresponding to a user query, comprising:
an infrequent word identifier that identifies infrequent words that occur in less than a threshold number of documents;
a frequent word index that maps the location of documents that contain words that occur in more than the threshold number of documents;
an infrequent word index, maintained separately from the frequent word index, that maps the location of documents that contain infrequent words;
an index scanning component that, in response to a query containing an infrequent word, scans the infrequent word index to find the location of documents containing the infrequent word.

2. The system of claim 1 wherein the frequent word index is stored by document.

3. The system of claim 1 wherein the frequent word index is partitioned by document.

4. The system of claim 3 wherein the frequent word index is distributed across multiple computing systems.

5. The system of claim 1 wherein the infrequent word index is stored by document.

6. The system of claim 1 wherein the infrequent word index is partitioned by document.

7. The system of claim 6 wherein the infrequent word index is distributed across multiple computing computer systems.

8. The system of claim 1 wherein the infrequent word index is stored by word.

9. The system of claim 1 wherein the infrequent word index is partitioned by word.

10. The system of claim 9 wherein the infrequent word index is stored on a single computing computer system.

11. The system of claim 10 wherein the index scanning component, in response to a user query containing an infrequent word, retrieves document locations for documents having the infrequent word from the infrequent word index and transmits the retrieved document locations to computer systems containing frequent word indexes for the retrieved documents.

12. The system of claim 1 including an index cache associated with the infrequent word index that stores document locations for recently queried infrequent words.

13. A method for use with a search engine that processes user queries, the method searching a set of documents for documents containing terms found in a user query, comprising:
scanning the set of documents and gathering infrequent words that occur a number of times that is less than a threshold amount;
constructing an infrequent word index that maps infrequent words to locations of documents that contain the words;
constructing a frequent word index, separately maintained from the infrequent word index, that maps frequent words that occur a number of times that is greater than the threshold amount to locations of documents that contain the words; and
examining the terms in the user query to identify any terms are infrequent words; and
searching the infrequent word index for the terms that are identified as infrequent words.

14. The method of claim 13 comprising storing the infrequent word index in a dedicated computer system.

15. The method of claim 13 comprising storing the infrequent word index in dedicated partitions on computer systems that also store the frequent word index.

16. The method of claim 13 comprising storing the infrequent index by word.

17. The method of claim 13 comprising storing the infrequent index by document.

18. A computer readable medium comprising computer-executable instructions for performing the method of claim 13.

19. A computer readable medium for use with a search engine that processes user queries, the computer readable medium comprising computer-executable instructions for locating documents containing words corresponding to a user query by:
identifying infrequent words that occur in less than a threshold number of documents;
mapping the location of documents that contain words that occur in more than the threshold number of documents in a frequent word index;
maintaining, separately from the frequent word index, an infrequent word index that maps the location of documents that contain infrequent words;
in response to a query containing an infrequent word, scanning the infrequent word index to find the location of documents containing the infrequent word.

20. The computer readable medium of claim 19 wherein the infrequent word index is stored by document.

21. The computer readable medium of claim 19 wherein the infrequent word index is partitioned by document.

22. The computer readable medium of claim 19 wherein the infrequent word index is distributed across multiple computing computer systems.

23. The computer readable medium of claim 19 wherein the infrequent word index is stored by word.

24. The computer readable medium of claim 19 wherein the infrequent word index is partitioned by word.

25. The computer readable medium of claim 19 wherein the infrequent word index is stored on a single computing computer system.

26. The computer readable medium of claim 19 including creating an index cache associated with the infrequent word index that stores document locations for recently queried infrequent words.

27. An apparatus for use with a search engine that processes user queries, the apparatus for searching set of documents for documents containing terms found in a user query, comprising:
means for scanning the set of documents and gathering infrequent words that occur a number of times that is less than a threshold amount;
means for constructing an infrequent word index that maps infrequent words to locations of documents that contain the words;
means for constructing a frequent word index, separately maintained from the infrequent word index, that maps frequent words that occur a number of times that is greater than the threshold amount to locations of documents that contain the words; and
means for examining the terms in the user query to identify any terms are infrequent words; and
means for searching the infrequent word index for the terms that are identified as infrequent words.
